# EUROPÄISCHE PATENTSCHRIFT

(11) **EP 3 003 747 B1**
(45) Veröffentlichungstag und Bekanntmachung des Hinweises auf die Patenterteilung: **19.02.2020**
(21) Anmeldenummer: 14717795.0
(22) Anmeldetag: 15.04.2014
(51) Int. Cl.: B60H 1/00, B60H 1/32, F28D 20/02, B60H 3/02, F28D 21/00

(54) **KLIMATISIERUNGSVORRICHTUNG FÜR EIN KRAFTFAHRZEUG UND VERFAHREN ZU DEREN BETRIEB**
AIR-CONDITIONING SYSTEM FOR A MOTOR VEHICLE AND METHOD FOR OPERATING SAID AIR-CONDITIONING SYSTEM
DISPOSITIF DE CLIMATISATION POUR VÉHICULE À MOTEUR ET PROCÉDÉ DE FONCTIONNEMENT

(30) Priorität: 08.06.2013 DE 102013009712; 22.01.2014 DE 102014201155
(43) Veröffentlichungstag der Anmeldung: 13.04.2016
(73) Patentinhaber: Volkswagen Aktiengesellschaft, 38440 Wolfsburg (DE)
(72) Erfinder: ALBRECHT, Jan-Christoph, 38442 Wolfsburg (DE); WACHSMUTH, Cartsten, 38179 Lagesbüttel (DE); VRIELINK, Nils, 31234 Edemissen (DE); DOBMANN, Michael, 38442 Wolfsburg (DE)
(86) Internationale Anmeldenummer: PCT/EP2014/057675
(87) Internationale Veröffentlichungsnummer: WO 2014/195053

(56) Entgegenhaltungen:
- DE-A1- 10 308 254
- DE-A1- 19 751 702
- FR-A1- 2 915 135
- US-A1- 2003 221 820
- US-B1- 6 330 909

## Beschreibung

Die Erfindung bezieht sich auf eine Klimatisierungsvorrichtung für ein Kraftfahrzeug, umfassend einen Kältemittelkreis mit wenigstens einem als Kältemittel/Luft-Wärmetauscher ausgebildeten und bei einer Arbeitstemperatur von weniger als 0°C betreibbaren Verdampfer, über den Kühlluft mittels einer Luftströmungserzeugungseinheit in einen Innenraum des Kraftfahrzeugs einblasbar ist.

Die Erfindung bezieht sich weiter auf Verfahren zum Betrieb einer solchen Klimatisierungsvorrichtung.

Die US 6 330 909 B1 und die DE 197 51 702 A1 offenbaren jeweils eine gattungsgemäße Klimatisierungsvorrichtung.

Klimatisierungsvorrichtungen für Kraftfahrzeuge, mittels deren ein gekühlter Luftstrom in den Innenraum eines Kraftfahrzeugs geblasen wird, sind bei modernen Kraftfahrzeugen üblich. Sie umfassen in der Regel einen Kältemittelkreis, in dem ein Kältemittel zyklisch eine Folge aus Kompressor, Wärmetauscher, Entspannungsventil und Verdampfer durchläuft. Im Kompressor wird das Kältemittel komprimiert. In einem strömungstechnisch nachgeschalteten Wärmetauscher, der häufig als Kältemittel/Luft-Wärmetauscher oder Kältemittel/Wasser-Wärmetauscher ausgebildet ist, wird das durch die Kompression erhitzte Kältemittel abgekühlt und mittels des strömungstechnisch nachgeschalteten Entspannungsventil entspannt. Danach durchläuft das abgekühlte und entspannte Kältemittel einen Verdampfer, in dem es von dem flüssigen in den gasförmigen Aggregatzustand überführt wird. Der Verdampfer ist dabei typischerweise als Kältemittel/Luft-Wärmetauscher ausgebildet, der in wärmeaustauschender Weise mit einem Luftpfad wechselwirkt. Der Luftpfad umfasst typischerweise ein Gebläse, welches Kühlluft durch Lamellen des Verdampfer-Wärmetauschers und über ein Kanalsystem in den Innenraum des Kraftfahrzeugs einbläst. Insbesondere wird die Luft bei der Passage des Verdampfer-Wärmetauschers durch die Verdunstungskälte des verdampfenden Kältemittels abgekühlt.

Die sich für den Innenraum des Kraftfahrzeugs ergebende Kühlleistung hängt bei vorgegebener Temperatur der Kühlluft im Wesentlichen von dem Kühlluft-Volumenstrom ab, der seinerseits vom Kanalquerschnitt und der Strömungsgeschwindigkeit der Kühlluft abhängt. Bauraumbedingt ist meist der Kanalquerschnitt beschränkt, sodass eine hohe Kühlleistung in der Regel durch einen verstärkten Gebläsebetrieb zur Erhöhung der Strömungsgeschwindigkeit erzielt wird. Dies ist jedoch mit höherer Geräuschbelastung im Fahrzeuginnenraum verbunden. Das muss als nachteilig angesehen werden.

Aus der DE 103 08 254 A1 ist eine Klimatisierungsvorrichtung mit einem in zwei Segmente unterteilten Verdampfer bekannt. Die zwei Segmente sind kältemittelseitig in Reihe geschaltet. Eines der Segmente ist als Speichersegment ausgebildet und mit einem Latentkältespeicher verbunden. Bei laufendem Fahrzeugmotor wird die Kühlluft über das Primärsegment geleitet, während das Speichersegment von Kühlluft nicht durchströmt wird. Stattdessen wird seine Kühlleistung zur Aufladung des Latentkältespeichers genutzt. Bei stehendem Fahrzeugmotor, wenn das Primärsegment keine Kühlleistung erbringen kann, wird die Kühlluft über das Speichersegment und den Latentkältespeicher geleitet.

Die US 2003/0221820 A1 offenbart eine Klimatisierungsvorrichtung mit einer dem Verdampfer luftseitig vorgeschalteten Entfeuchtungseinheit, die dann aktiviert wird, wenn der den Verdampfer umfassende Kältemittelkreis aufgrund zu niedriger Außentemperaturen nicht mehr effizient arbeiten kann. Dann nämlich wird die Innenluft des Fahrzeugs über die Entfeuchtungseinrichtung umgewälzt, die ihrerseits die zur Entfeuchtung nötige Kälte aus der kalten Umgebungsluft bezieht. In einem Ausführungsbeispiel ist die Entfeuchtungseinrichtung als Luft/Luft-Wärmetauscher zum direkten Wärmeaustausch zwischen Außen- und Innenluft ausgebildet. In einem anderen Ausführungsbeispiel ist die Entfeuchtungseinrichtung als Fluid/Luft-Wärmetauscher mit kühlmittelseitiger Verbindung zu einem Außen- (Luft/Fluid-) Wärmetauscher zum indirekten Wärmeaustausch zwischen Außen- und Innenluft ausgebildet.

Die FR 2 915 135 A1 offenbart eine Klimatisierungsvorrichtung, deren Verdampfer ein hygroskopisches Sorptionsmittel als Entfeuchtungseinheit luftseitig vorgeschaltet ist.

Es ist die Aufgabe der vorliegenden Erfindung eine Klimatisierungsvorrichtung für ein Kraftfahrzeug sowie Verfahren zu deren Betrieb zur Verfügung zu stellen, mit denen eine größere Kühlleistung ohne verstärkte Geräuschbelastung im Fahrzeuginnenraum oder bzw. bei gleicher Kühlleistung ein erhöhter Geräuschkomfort erzielbar ist.

Diese Aufgabe wird in Verbindung mit den Merkmalen des Oberbegriffs von Anspruch 1 dadurch gelöst, dass der Verdampfer zwei unabhängig voneinander betreibbare, parallel zueinander von der Kühlluft durchströmbare Verdampfersegmente aufweist.

Die Aufgabe wird zudem in Verbindung mit den Merkmalen des Oberbegriffs von Anspruch 2 dadurch gelöst, dass dem Verdampfer in Strömungsrichtung der Kühlluft ein ebenfalls als Kältemittel/Luft-Wärmetauscher ausgebildeter und bei einer Arbeitstemperatur von mehr als 0°C betriebener Entfeuchtungsverdampfer strömungstechnisch vorgeschaltet ist.

Weitere Merkmale und Vorteile sind Gegenstand der abhängigen Patentansprüche.

Der Erfindung liegt der an sich bekannte Gedanke zugrunde, die Kühlleistung nicht oder zumindest nicht nur über eine Variation des Kühlluft-Volumenstroms zu variieren, sondern primär durch Wahl der Kühlluft-Temperatur. Insbesondere sieht die Erfindung vor, den Verdampfer bei besonders niedrigen Arbeitstemperaturen zu betreiben, um die Kühlluft entsprechend tief, insbesondere unter 0°C abzukühlen. Von derart tief gekühlter Luft muss zur Erzielung einer gewünschten Kühlleistung deutlich weniger in den Fahrzeuginnenraum eingeblasen werden, als bei herkömmlichen Klimatisierungsvorrichtungen. Diese vermeiden nämlich den Betrieb des Verdampfers bei einer Arbeitstemperatur unterhalb des Gefrierpunktes, weil dabei die in der Luft enthaltene Feuchtigkeit am Verdampfer-Wärmetauscher ausfriert und dessen Durchströmungslamellen zusetzt und/oder die thermische Wechselwirkung zwischen den metallischen Wärmetauscher-Lamellen und der Kühlluft negativ beeinflusst. Man spricht hier vom Zufrieren des Verdampfer-Wärmetauschers. Die vorliegende Erfindung setzt sich über dieses Vorurteil der Fachwelt hinweg und sieht ganz bewusst einen unter dem Gefrierpunkt betreibbaren Verdampfer vor. Dies ist für den Fachmann beispielsweise durch Wahl eines geeigneten Kältemittels leicht realisierbar. Beispielsweise könnten für die Erzielung von Arbeitstemperaturen von bis zu - 15°C Kältemittel mit thermodynamischen Eigenschaften ähnlich R134a verwendet werden. Für die Erzielung noch tieferer Temperaturen, beispielsweise bis zu -30°C, könnten Kältemittel mit thermodynamischen Eigenschaften ähnlich R744 verwendet werden.

Selbstverständlich ist auch eine solche Klimatisierungsvorrichtung mit der oben erläuterten Vereisungsproblematik konfrontiert. Die Erfindung bietet hier unterschiedliche Lösungskonzepte.

Bei einer ersten erfindungsgemäßen Ausführungsform ist vorgesehen, dass der Verdampfer zwei unabhängig voneinander betreibbare, parallel zueinander von der Kühlluft durchströmbare Verdampfersegmente aufweist. Nachfolgend soll in diesem Zusammenhang von einem geteilten Verdampfer gesprochen werden. Ein solcher geteilter Verdampfer wird bevorzugt so betrieben, dass während einer Betriebsphase nur ein erstes der Verdampfersegmente in einem Verdampferbetrieb bei einer Arbeitstemperatur von weniger als 0°C betrieben wird, während ein zweites der Verdampfersegmente, das in einer vorangehenden Betriebsphase im Verdampferbetrieb bei einer Arbeitstemperatur von weniger als 0°C betrieben wurde, in einem Abtaubetrieb betrieben wird. Mit anderen Worten wird im Fall, dass hohe Kühlleistungen gefordert werden, nur ein Teil des Verdampfers im Verdampferbetrieb zur drastischen Abkühlung der Kühlluft auf unter den Gefrierpunkt betrieben. Während dieses Verdampferbetriebs kommt es mit der Zeit zu der oben erläuterten Vereisung, die sich negativ auf die effektive Kühlleistung im Fahrzeuginnenraum auswirkt. Durch eine weiter unten beschriebene, geeignete Steuerung kann dann der Verdampferbetrieb in dem vereisten Verdampferteil abgeschaltet und auf den anderen, nicht vereisten Verdampferteil übertragen werden. Während dieser für die ausreichende Kühlleistung im Fahrzeuginnenraum sorgt, wird der vereiste Verdampferteil im Abtaubetrieb betrieben und enteist.

Dies kann auf unterschiedliche Weise geschehen. In der Regel dürfte es genügen, wenn im abzutauenden Verdampferteil keine Verdampfung stattfindet und der vereiste Wärmetauscherteil gleichwohl von Kühlluft durchströmt wird. Alternativ kann der vereiste Wärmetauscherteil auch mit erwärmter Luft oder Motorkühlwasser gespült oder elektrisch beheizt werden, um einen aktiven Abtauvorgang zu erzeugen. In diesem Fall ist es günstig, in Kühlluftströmungsrichtung vor dem Verdampfer verstellbare Luftleitmittel vorzusehen, mit denen eine Beströmung des jeweils vereisten Wärmetauscherteils mit Kühlluft verhindert wird. Andernfalls nämlich würde evtl. erwärmte Kühlluft in den Fahrzeuginnenraum eingeblasen.

Bei einer zweiten erfindungsgemäßen Ausführungsform, die alternativ oder zusätzlich zu der ersten erfindungsgemäßen Ausführungsform realisierbar ist, ist vorgesehen, dass dem Verdampfer in Strömungsrichtung der Kühlluft ein ebenfalls als Kältemittel/Luft-Wärmetauscher ausgebildeter und bei einer Arbeitstemperatur von mehr als 0°C betriebener Entfeuchtungsverdampfer strömungstechnisch vorgeschaltet ist. Zwischen dem eigentlichen Verdampfer und dem hier als Entfeuchtungsverdampfer bezeichneten Verdampfer besteht kein prinzipieller Unterschied; die unterschiedliche Bezeichnung dient lediglich der besseren Unterscheidbarkeit der Elemente hinsichtlich ihrer vorrangigen Funktionen. Mittels des Entfeuchtungsverdampfers wird die Kühlluft bereits vorgekühlt, was gleichzeitig zu ihrer Entfeuchtung führt. Da der Entfeuchtungsverdampfer jedoch bei einer Arbeitstemperatur oberhalb des Gefrierpunktes betrieben wird, besteht hier keine Gefahr einer Vereisung. Dadurch, dass der Tieftemperatur-Verdampfer nun von entfeuchteter Luft durchströmt wird, reduziert sich das Risiko seiner Vereisung deutlich, zumindest kann hierdurch der Zeitraum bis zu einer die Kühlleistung deutlich beeinträchtigenden Vereisung erheblich verlängert werden. Die beiden Verdampfer können separate Geräte oder unterschiedlich ausgestaltete Bestandteile ein und desselben Gerätes sein.

Trotz der durch den vorgeschalteten Entfeuchtungsverdampfer bedingten Verlängerung der Zeitspanne bis zur kritischen Vereisung kann diese nicht vollständig ausgeschlossen werden. Bei einer günstigen Weiterbildung der vorgenannten Erfindungsvariante ist daher vorgesehen, dass der Verdampfer so ausgebildet ist, dass ausfrierende Luftfeuchtigkeit in schneeartiger Form anfällt. Ebenfalls ist es sinnvoll, den Verdampfer so zu optimieren, dass sich beim Vereisen der luftseitige Druckverlust möglichst langsam aufbaut. Dies ist ebenso wie die schneeartige Vereisung, z.B. durch geeignete Wahl von Fin-Abstand und -Ausrichtung, Louver-Pitch und -Length und/oder der Oberflächenbeschichtung erreichbar. Der Fachmann wird hier unter Berücksichtigung der durch Bauraumvorgaben und Vorgaben bzgl. der zu realisierenden Betriebszustände eine geeignete Abstimmung finden können. Der Vorteil der schneeartigen Eisbildung liegt in der wesentlich leichteren Abtaubarkeit dieser Vereisungsform im Vergleich zu solidem Festeis aufgrund der größeren Oberfläche. Entsprechend kürzere Abtauzeiten sind erforderlich. Dies erhöht den Klimakomfort im Fahrzeuginnenraum.

Einem ähnlichen Gedanken folgt eine zusätzlich zu jeder beiden erfindungsgemäßen Varianten realisierbare Ausführungsform der Erfindung, bei der dem Verdampfer in Strömungsrichtung der Kühlluft eine von der Kühlluft durchströmte Sorptionsmitteleinheit strömungstechnisch vorgeschaltet ist. Als Sorptionsmittel wird hier jede Substanz verstanden, die in der Lage ist, Feuchtigkeit aus der sie umgebenden Luft zu ziehen. Rein beispielhaft sei hier Silika-Gel genannt. Je nach Beschaffenheit und Konsistenz des konkret verwendeten Sorptionsmittels wird es dem Fachmann ein Leichtes sein, eine entsprechende, von der Kühlluft durchströmbare Einheit zu konstruieren, die einerseits eine deutliche Entfeuchtung der Kühlluft bewirkt und andererseits den Kühlluftstrom nicht wesentlich behindert. Bzgl. der Wirkung dieser Entfeuchtung wird auf die obige Erläuterung verwiesen.

Alternativ oder zusätzlich zu dem oben erläuterten, speziell auf geteilte Verdampfer bezogenen Betriebsverfahren kann als Verfahren zum Betrieb sämtlicher vorgenannter Varianten vorgesehen sein, dass der Verdampfer abwechselnd in einem Verdampferbetrieb bei einer Arbeitstemperatur von weniger als 0°C und in einem Abtaubetrieb betrieben wird. Der Begriff des Abtaubetriebs ist dabei entsprechend der obigen Erläuterung zu verstehen. Im Detail lassen sich für diesen alternierenden Betriebsmodus zwei grundsätzlich mögliche Verfahrensvarianten unterscheiden.

Bei einer ersten vorteilhaften Verfahrensvariante ist vorgesehen, dass ein Betriebsparameter der Klimatisierungsvorrichtung von einer Steuereinheit überwacht wird und dass bei Erreichen einer vorgegebenen Toleranzbereichsgrenze des Parameterwertes des überwachten Betriebsparameters ein Wechsel zwischen dem Verdampferbetrieb und dem Abtaubetrieb angesteuert wird. Der hierzu überwachte Parameter kann beispielsweise die Temperatur der Kühlluft hinter dem Verdampfer, eine Druckdifferenz des Kühlluftdrucks über dem Verdampfer und/oder ein Geräuschpegel eines zur Aufrechterhaltung eines konstanten Drucks hinter dem Verdampfer geregelten Gebläses sein. Im erstgenannten Fall der Temperaturüberwachung deutet ein Anstieg der Kühllufttemperatur auf einen ineffizienten Verdampferbetrieb hin, was wiederum als Indiz für eine fortgeschrittene Vereisung gewertet werden kann. Folglich könnte der Anstieg der Kühllufttemperatur in Strömungsrichtung hinter dem Verdampfer als Auslöser eines Wechsels vom Verdampferbetrieb in den Abtaubetrieb genutzt werden. Dies setzt selbstverständlich eine geeignet eingerichtete und programmierte Steuerungsvorrichtung voraus, die grundsätzlich in Form von Steuergeräten jedoch in Kraftfahrzeugen üblich ist. Alternativ oder zusätzlich zu der erläuterten Temperaturüberwachung kann die Druckdifferenz des Kühlluftdrucks zwischen einem Bereich unmittelbar vor und unmittelbar hinter dem Verdampfer (in Kühlluftströmungsrichtung) genutzt werden. Hierzu ist ein entsprechender Differenzdruckaufnehmer oder ein Paar Absolutdruckaufnehmer erforderlich. Ein Anstieg des Differenzdrucks über einen vorgegebenen Schwellenwert signalisiert ein Zusetzen des Lamellenzwischenraums des Verdampfer-Wärmetauschers mit Eis und kann daher sinnvoll als Auslöser einer Umschaltung vom Verdampferbetrieb in den Abtaubetrieb genutzt werden. Auch hier ist eine geeignet eingerichtet und programmierte Steuervorrichtung selbstverständlich erforderlich. Noch günstiger im Hinblick auf eine konstante Kühlleistung im Fahrzeuginnenraum erscheint jedoch die Regelung des Gebläses, sodass in Kühlluftströmungsrichtung hinter dem Verdampfer ein konstanter Druck herrscht. Dies entspricht im Ergebnis einem konstanten Kühlluft-Volumenstrom in den Fahrzeuginnenraum. Bei zunehmender Vereisung des Verdampfer-Wärmetauschers muss das Gebläse mit höherer Leistung angesteuert werden. Hierdurch erhöht sich der Geräuschpegel. Dieser kann als kritischer Betriebsparameter für den Wechsel vom Verdampferbetrieb in den Abtaubetrieb genutzt werden. Beispielsweise kann ein Pegelanstieg um zwei, vier oder sechs Dezibel als Grenzwert eingerichtet sein, bei dessen Überschreitung der Betriebsartwechsel des Verdampfers erfolgt.

Die Wahl der Grenzwerte kann bei den drei vorgenannten Varianten starr vorgegeben und beispielsweise in einem Speicher hinterlegt werden. Günstiger erscheint es jedoch, wenn die Toleranzbereichsgrenzen jeweils auf Basis einer Mehrzahl aktueller Betriebsparameter berechnet werden. Insbesondere kann ein strömungstechnisches, mathematisches Modell hinterlegt werden, welches aktuelle Parameter, wie beispielsweise Fahrzeuggeschwindigkeit, Außentemperatur, Kühlluftströmungsgeschwindigkeit etc. berücksichtigt und hieraus einen Sollwert bzw. einen Sollwertbereich für den überwachten Betriebsparameter liefert. So kann beispielsweise der Geräuschpegel-Schwellenwert bei hohen Fahrzeuggeschwindigkeiten höher ausfallen als bei niedrigen Fahrzeuggeschwindigkeiten.

Bei einer stark vereinfachten Variante dieser Ausführungsform, die auf die Überwachung von Betriebsparametern verzichtet, ist vorgesehen, dass ein Wechsel zwischen dem Verdampferbetrieb und dem Abtaubetrieb jeweils nach Ablauf einer vorgegebenen Zeitspanne erfolgt, wobei die vorgegebene Zeitspanne auf Basis einer Mehrzahl aktueller Betriebsparameter berechnet wird. Auch hier wird ein strömungstechnisches, mathematisches Modell, welches aktuelle Betriebsparameter einbezieht, aufgestellt. Mit diesem Modell lassen sich Vorhersagen treffen, nach welchem Zeitraum im Verdampferbetrieb eine nicht mehr tolerierbare Vereisung des Verdampfer-Wärmetauschers zu erwarten ist. Zu diesem Zeitpunkt erfolgt die Umschaltung der Betriebsart. Analoges gilt für die Rückumschaltung vom Abtaubetrieb in den Verdampferbetrieb. Eine messtechnische Überprüfung der tatsächlichen Vereisung erfolgt bei dieser Ausführungsform nicht.

Alternativ oder - vorzugsweise - zusätzlich zu den vorangehend beschriebenen Maßnahmen kann vorgesehen sein, dass von der Klimatisierungsvorrichtung unabhängige Betriebsparameter des Kraftfahrzeugs in die Planung der Betriebsphasenwechsel zwischen Verdampfer- und Abtaubetrieb einbezogen werden. Diese Variante bietet sich insbesondere dann an, wenn zeitweise keine Leistung des Klimakompressors zur Verfügung steht, beispielsweise in Stopp-Phasen bei Fahrzeugen mit Start-Stopp-Automatik (oder ihrem manuell aktivierten Äquivalent). Der Klimakompressor ist nämlich meist mechanisch mit der Kurbelwelle des Verbrennungsmotors gekoppelt und arbeitet daher in der Regel nur bei laufendem Verbrennungsmotor. Während Stillstandsphasen des Verbrennungsmotors, die insbesondere aus Gründen der Energieeinsparung z.B. während Wartezeiten an Ampeln oder - bei Hybridfahrzeugen - während des elektrischen Fahrbetriebs auftreten, kann folglich bei herkömmlichen Klimatisierungsvorrichtungen der Klimatisierungskomfort erheblich leiden. Bei der Festlegung des Timings ist es daher vorteilhaft, wenn in die Bestimmung des Zeitpunktes eines Wechsels zwischen dem Verdampferbetrieb und dem Abtaubetrieb der aktuelle und/oder ein antizipierter Betriebszustand eines von einem Verbrennungsmotor angetriebenen Klimakompressors, d.h. insbesondere der aktuelle oder antizipierte Betriebszustand des Verbrennungsmotors selbst, einbezogen wird. Erfolgt nämlich der ohnehin erforderliche Abtaubetrieb während solcher Stillstandsphasen des Verbrennungsmotors, kann die im angesetzten Eis gespeicherten Kälte zur Überbrückung solcher Phasen genutzt werden. Das Eis dient somit aufgrund des Phasenübergangs zwischen den Aggregatzuständen als Latentspeicher für Kälte.

Bei einer bevorzugten Ausführungsform der Erfindung ist daher vorgesehen, dass der Abtaubetrieb mit Stillstandsphasen des Verbrennungsmotors synchronisiert wird. Der Begriff der Synchronisierung ist dabei nicht eng im Sinne einer exakten Gleichtaktung von Abtau-und Stillstandsphasen zu verstehen. Vielmehr ist gemeint, dass eine künftige Stillstandsphase des Verbrennungsmotors antizipiert, ein Toleranzbereich für den Schwellenwert des überwachten Betriebsparameters vorgegeben und der Zeitpunkt des Betriebsartwechsels innerhalb seines resultierenden Toleranzbereichs so bestimmt wird, dass der Verdampfer während der antizipierten Stillstandsphase im Abtaubetrieb betrieben wird. Aus der Bestimmung der Schwellenwerte mit jeweiligen Toleranzbereichen folgt ein resultierender, zeitlicher Toleranzbereich für den Wechselzeitpunkt. Dieser kann ausgenutzt werden, um eine als in Zukunft erforderlich erkannte Abtauphase vorzuziehen oder zu verzögern, um eine möglichst große Überlappung mit einer antizipierten Stillstandsphase des Verbrennungsmotors zu erreichen und so die unter Klimakomfortaspekten kritische Phase zu überbrücken. In der Regel wird das konkrete Timing das Ergebnis einer Abwägung technischer und komfortbezogener Aspekte sein, die in einem im entsprechenden Steuergerät in Software hinterlegten Regelwerk realisiert ist.

Die grundlegende Idee einer Verwendung des Eises unvermeidlich an dem unter dem Gefrierpunkt betriebenen Verdampfer oder Verdampfersegment entsteht als Latentspeicher kann auch noch mittels einer weiteren Maßnahme zur Energieeinsparung genutzt werden. Dabei ist vorgesehen, dass der Verdampfer oder das Verdampfersegment während einer Schubphase des Verbrennungsmotors bei einer gegenüber Zugphasen des Verbrennungsmotors verringerter Arbeitstemperatur angesteuert wird. Dies erfolgt vorzugsweise durch eine entsprechend verstärkte Ansteuerung des Klimakompressors, beispielsweise durch Erhöhung dessen Hubs, und kann sowohl während reiner Schubphasen als auch kombinierter Brems- und Schubphasen geschehen. Zum einen trägt der Klimakompressor damit zur erwünschten Geschwindigkeitsreduktion des Fahrzeugs bei; zum anderen wird dabei die Eisbildung und somit die Kältespeicherung in einem Latentspeicher forciert. Die so rekuperierte kinetische Energie des Fahrzeugs lässt sich, wie oben erläutert, durch geeignetes Zeitmanagement bei der Ansteuerung von Verdampfer- und Abtaubetriebsphasen zur Überbrückung kritischer Klimatisierungsphasen nutzen. Zur Beibehaltung der Klimatisierungsleistung im Fahrzeuginneren während der Rekuperationsphasen, wird währenddessen bevorzugt die Gebläsegeschwindigkeit entsprechend reduziert.

Dem Fachmann ist zwar grundsätzlich die Verwendung von Latentspeichern im Zusammenhang mit Klimatisierungsvorrichtungen bekannt; diese verwenden jedoch sämtlich zusätzliche Speicherelemente im Luftweg. Neben den damit verbundenen Raum-, Gewichts-und Kostennachteilen ist es auch problematisch, dass diese Elemente sommers wie winters be- und entladen werden, was gerade im Winter die Aufheizung des Innenraums verzögern kann ohne Vorteile bei der zu dieser Jahreszeit ohnehin nicht benötigten Kühlung zu bewirken. Im Gegensatz dazu erfolgt die erfindungsgemäße Nutzung des Eises aus ausgefrorener Luftfeuchtigkeit bedarfsgerecht.

Weitere Merkmale und Vorteile der Erfindung ergeben sich aus der nachfolgenden, speziellen Beschreibung und den Zeichnungen.

Es zeigen:
- Figur 1: eine schematische Darstellung einer ersten Ausführungsform der erfindungsgemäßen Klimatisierungsvorrichtung,
- Figur 2: eine schematische Darstellung einer zweiten Ausführungsform der erfindungsgemäßen Klimatisierungsvorrichtung,
- Figur 3: eine schematische Darstellung einer Klimatisierungsvorrichtung gemäß Stand der Technik,
- Figur 4: ein Flussdiagramm einer bevorzugten Ausführungsform eines Verfahrens zur Ansteuerung einer erfindungsgemäßen Klimatisierungsvorrichtung.

Gleiche Bezugszeichen in den Figuren weisen auf gleiche oder analoge Elemente hin.

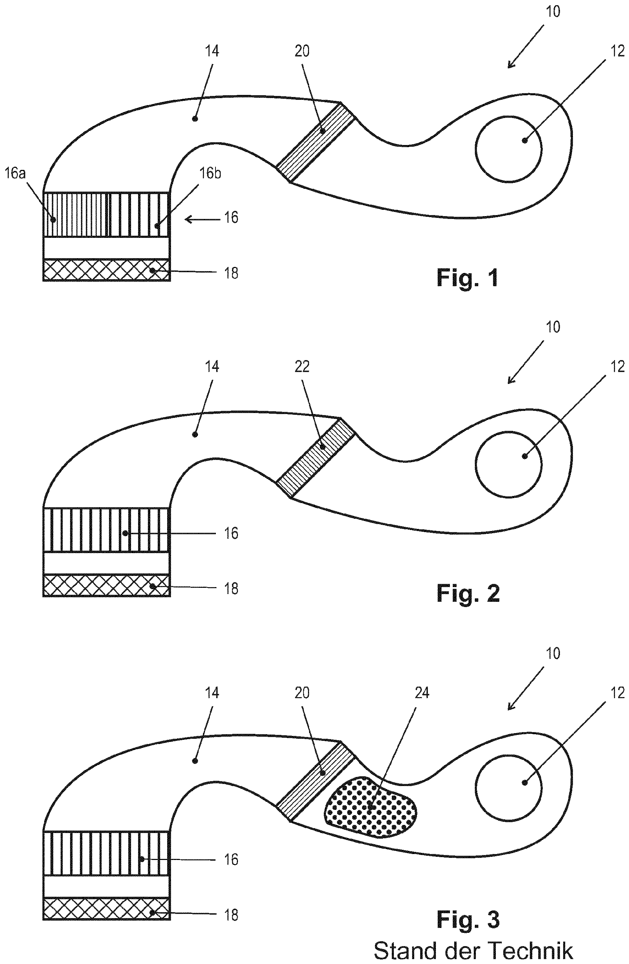

Die Figuren 1 bis 3 zeigen jeweils in stark schematisierter Darstellung eine Klimatisierungsvorrichtung 10 für ein Kraftfahrzeug. Diese umfasst jeweils ein Gebläse 12, mittels dessen Kühlluft durch eine Kanalanordnung 14 in einen nicht dargestellten Innenraum eines Kraftfahrzeugs geblasen werden kann. Dabei passiert die Kühlluft einen Verdampfer 16 eines im Übrigen nicht dargestellten Kältemittelkreises. Der Verdampfer 16 ist dabei als Kältemittel/Luft-Wärmetauscher ausgebildet. Bevorzugt weist er eine Lamellenstruktur auf, die von der Kühlluft durchströmt wird und in engem thermischen Kontakt mit dem im Verdampfer 16 verdampften Kältemittel steht. Bei Passage der Kühlluft durch den Verdampfer 16 erfolgt somit eine Abkühlung der Kühlluft.

Bei den gezeigten Ausführungsformen ist dem Verdampfer 16 ein Heizungswärmetauscher 18 in Kühlluftströmungsrichtung nachgeschaltet. Der Heizungswärmetauscher 18 dient ggf. einem Gegenheizen der Kühlluft, wenn im Fahrzeuginneren ein weniger tief gekühlter Kühlluftstrom gewünscht ist. Der Heizungswärmetauscher 18, der somit nur in besonderen Fällen bei Bedarf aktiviert ist, ist für die vorliegende Erfindung nicht wesentlich.

Die obigen Erläuterungen beziehen sich auf sämtliche dargestellten Ausführungsformen, deren Unterschiede nachfolgend unter Bezugnahme auf die einzelnen Figuren detailliert dargestellt werden sollen. Gemeinsam ist allen drei Ausführungsformen, deren Unterschiede nachfolgend unter Bezugnahme auf die einzelnen Figuren detailliert dargestellt werden sollen, dass der Verdampfer 16 jeweils bei einer Arbeitstemperatur unterhalb des Gefrierpunktes betreibbar ist und bevorzugt, zumindest bei Anforderung einer besonders hohen Kühlleistung im Fahrzeuginnenraum, so betrieben wird. Dies ist insbesondere durch Wahl eines entsprechend geeigneten Kältemittels realisierbar.

Die Ausführungsform gem. Figur 1 zeichnet sich durch einen geteilten Verdampfer 16 aus. Dieser umfasst zwei Verdampfersegmente 16a, 16b, die in Figur 1 durch unterschiedliche Schraffuren unterschieden sind. Zwischen den beiden Verdampfersegmenten 16a, 16b besteht kein prinzipieller Aufbau- oder Funktionsunterschied. Allerdings sind beide Verdampfersegmente 16a, 16b unabhängig voneinander betreibbar. So ist als bevorzugtes Betriebsverfahren vorgesehen, dass nur eines der Verdampfersegmente 16a. 16b im Verdampferbetrieb, insbesondere bei einer Arbeitstemperatur unterhalb des Gefrierpunktes betrieben wird, während das andere Verdampfersegment 16b, 16a inaktiv ist, gleichwohl von der Kühlluft durchströmt wird. Das aktive Verdampfersegment 16a, 16b wird bei längerem Betrieb aufgrund der in der Kühlluft enthaltenen Feuchtigkeit und aufgrund des Betriebes unterhalb des Gefrierpunktes an seinen Lamellen Eis ansetzen, welches beim Aufwachsen der Eiskristalle die Luftdurchlässe zwischen den Lamellen zunehmend verlegt. Das Erreichen eines kritischen Vereisungsstadiums wird entweder messtechnisch detektiert oder aufgrund eines strömungstechnischen Modells berechnet und nach Ablauf eines berechneten Zeitablaufs als erreicht angenommen. Das bislang aktive Verdampferelement 16a, 16b wird daraufhin inaktiviert und das bislang inaktive Verdampferelement 16b, 16a aktiviert. Letzteres sorgt dann in analoger Weise für eine kontinuierliche Fortführung der Kühlluftkühlung. Das nunmehr inaktivierte Verdampferelement 16a, 16b wird weiter von Kühlluft, die vor dem Verdampfer 16 Umgebungstemperatur, insbesondere eine Temperatur über 0° C aufweist, durchströmt und dadurch abgetaut. Die Kühlluft erfährt dabei weiterhin eine Kühlung, wenngleich nicht in dem Maße, wie bei dem nunmehr aktivierten Verdampfersegment 16b, 16a. Dieser Betriebsartwechsel zwischen den Verdampfersegmenten 16a, 16b kann in analoger Weise alternierend fortgesetzt werden, wobei die Erfindung nicht auf die Verwendung von genau zwei Verdampfersegmenten beschränkt ist. Hierbei kann die Luft aus den beiden Verdampfersegmenten entweder in einem in Kühlluftströmungsrichtung nachgeschalteten Mischraum gemischt werden.

Alternativ kann die Luft aus dem im Abtaubetrieb betriebenen Verdampfersegment auch abgeführt werden, was im Hinblick auf deren vergleichsweise hohen Feuchtegehalt vorteilhaft sein kann.

Bei der in Figur 1 dargestellten Ausführungsform ist dem Verdampfer 16 in Strömungsrichtung noch ein Filter vorgeschaltet, der eine Verschmutzung der Verdampferlamellen verhindert bzw. reduziert.

Figur 2 zeigt eine Ausführungsform mit ungeteiltem Verdampfer 16. Anstelle des bei der Ausführungsform von Figur 1 vorgesehenen Filters 20 ist bei der Ausführungsform von Figur 2 ein zusätzlicher Verdampfer vorgesehen, der hier als Entfeuchtungsverdampfer 22 bezeichnet wird. Dieser wird bei einer Arbeitstemperatur oberhalb des Gefrierpunktes, bevorzugt knapp oberhalb des Gefrierpunktes betrieben. Auch der Entfeuchtungsverdampfer 22 ist als Kältemittel/Luft-Wärmetauscher ausgebildet und kühlt die ihn durchströmende Kühlluft aufgrund thermischer Wechselwirkung mit dem in seinem Inneren verdampften Kältemittel, das in einem nicht weiter dargestellten Kältemittelkreis geführt ist. Ein Nebeneffekt dieser Vorkühlung ist die Entfeuchtung der Kühlluft. Insbesondere wird die in der warmen Kühlluft enthaltene Feuchtigkeit bei der Passage des Entfeuchtungsverdampfers 22 an dessen Lamellen auskondensieren. Dem eigentlichen Verdampfer 16 wird somit getrocknete und vorgekühlte Kühlluft zugeführt. Entsprechend geringer ist das Vereisungsrisiko bzw. entsprechend länger ist der Zeitraum bis zur Vereisung des Verdampfers 16 im Vergleich zu einem ebenfalls bei Temperaturen unterhalb des Gefrierpunktes betriebenen und mit nicht entfeuchteter Luft beschickten Verdampfer. In den meisten Fällen wird diese Ausführungsform daher gänzlich ohne Abtaumanagement auskommen. Insbesondere ist davon auszugehen, dass der Verdampferbetrieb des Verdampfers 16 bei Arbeitstemperaturen unterhalb des Gefrierpunktes nur in Fällen eingesetzt wird, bei denen eine rasche Kühlung gewünscht wird. Typischerweise wird der Betrieb bei Arbeitstemperaturen unterhalb des Gefrierpunktes auch aus Komfortgründen kein Dauerzustand sein. Eine kritische Vereisung wird sich daher eher selten einstellen. Gleichwohl kann auch hier ein Abtaumanagement vorgesehen sein, welches auf unterschiedlichen Prinzipien (messtechnische Überwachung oder modelbasierte Zeitspannenberechnung) beruhen mag. Anders als bei der Ausführungsform von Figur 1 würden hier Verdampfer- und Abtaubetrieb nicht zwischen den Segmenten abwechseln, sondern in zeitlichem Wechsel den gesamten Verdampfer 16 betreffen. Im Übrigen kann auf die obige Erläuterung verwiesen werden.

Selbstverständlich ist es möglich, die beiden vorgenannten Varianten miteinander zu kombinieren, d.h. einen geteilten Verdampfer 16 mit einem vorgeschalteten Entfeuchtungsverdampfer 22 zu kombinieren.

Figur 3 schließlich zeigt eine Klimatisierungsvorrichtung 10 nach dem Stand der Technik mit ungeteiltem Verdampfer 16 und ohne Entfeuchtungsverdampfer 22. Vielmehr ist, wie bei der Ausführungsform von Figur 1, in der Kanalanordnung 14 ein Filter 20 angeordnet und dem Verdampfer 16 vorgeschaltet. Als Besonderheit der Klimatisierungsvorrichtung 10 von Figur 3 ist in der Kanalanordnung 14 eine Sorptionsmitteleinheit 24 angeordnet, die von der Kühlluft durchströmt wird und diese chemisch entfeuchtet. Die in Figur 3 gezeigte spezielle Anordnung der Sorptionsmitteleinheit 24 vor dem Filter 20 ist nicht zwingend erforderlich. Vielmehr kann sie an quasi beliebiger Stelle innerhalb der Kanalanordnung 14 vorgesehen sein. Selbstverständlich ist auch die Idee der Sorptionsmitteleinheit 24 innerhalb der Kanalanordnung 14 mit beiden vorgenannten, erfindungsgemäßen Ausführungsformen oder deren Kombination kombinierbar.

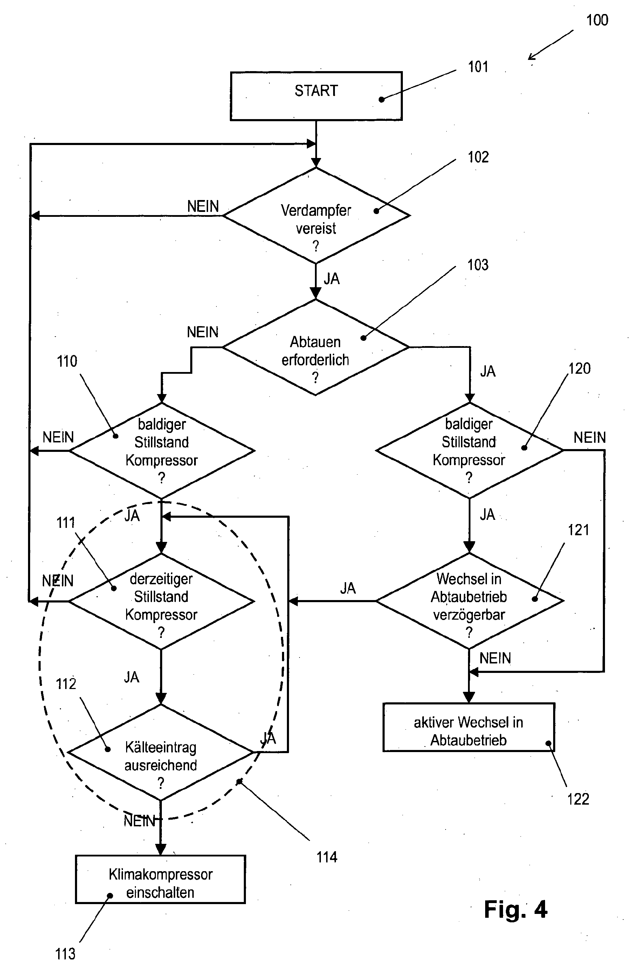

Figur 4 zeigt ein Flussdiagramm einer bevorzugten Ausführungsform eines Verfahrens 100 zur Ansteuerung einer erfindungsgemäßen Klimatisierungsvorrichtung mit dem Ziel eine Synchronisierung von Abtaubetriebsphasen und Stillstandsphasen des Kompressors, die typischerweise mit Stillstandsphasen des Verbrennungsmotors einhergehen. Der Startpunkt 101 der dargestellten Routine kann vom Fachmann an jeder geeigneten Stelle der allgemeinen Ansteuerung der Klimatisierungsvorrichtung eingebaut werde. Zunächst wird in einem Schritt 102 überprüft, ob aktuell der Verdampfer oder ein Verdampfersegment (beide werden im Flussdiagramm von Figur 4 sowie in der nachfolgenden Beschreibung als "Verdampfer" angesprochen) vereist ist. Dies kann anhand einer geeigneten Sensorik, wie weiter oben ausführlicher beschrieben, gemessen werden.

Liegt aktuell keine Vereisung des Verdampfers vor, kehrt der Prozess in eine allgemeine Vereisungs-Überwachungsroutine zurück. Liegt hingegen eine Vereisung des Verdampfers vor, wird im Schritt 103 überprüft, ob ein Abtauen erforderlich ist. Hierzu werden bevorzugt, wie weiter oben beschrieben, verschiedene Betriebsparameter der Klimatisierungsvorrichtung gemessen und ausgewertet. Insbesondere folgt ein Vergleich der gemessenen Werte mit hinterlegten oder berechneten Schwellenwerten, die jedoch bevorzugt nicht exakt, sondern mit sinnvoll gewählten Toleranzbereichen versehen werden. Wird hierbei festgestellt, dass ein Abtauen noch nicht erforderlich ist, d.h. der oder die gemessenen Betriebsparameter sich noch nicht innerhalb des oder der Toleranzbereiche um den oder die entsprechenden Schwellenwerte befinden, wird im linken Arm des Flussdiagramms von Figur 4 überprüft, ob ein zeitliches Vorziehen eines (passiven) Abtauintervalls sinnvoll ist.

Hierzu wird in Schritt 110 überprüft, ob ein baldiger Stillstand des Klimakompressors antizipierbar ist. Insbesondere kann dabei überprüft werden, ob ein baldiger Stillstand des Verbrennungsmotors, der den Klimakompressor antreibt, antizipierbar ist. Hierzu können Fahrtparameter oder Messwerte einer zusätzlichen Sensorik herangezogen werden. Beispielsweise kann mittels Car2Car- oder Car2X-Kommunikation, visueller, kameragestützter Umgebungsüberwachung, satellitengestützter Verkehrsüberwachung oder auf ähnliche Weise die Verkehrssituation in der Umgebung des Kraftfahrzeugs überprüft und auf mögliche Ursachen eines baldigen Fahrzeugstopps hin analysiert werden, der aufgrund einer Start-Stopp-Automatik voraussichtlich zu einem temporären Motorstillstand führt. Ist kein derartiger baldiger Kompressor- bzw. Motorstillstand antizipierbar, beispielsweise weil sich das Kraftfahrzeug mit hoher Geschwindigkeit auf einer wenig befahrenen Autobahn bewegt, kehrt der Prozess in die Überwachungsroutine zurück.

Ist jedoch ein baldiger Kompressor- bzw. Motorstillstand antizipierbar wird, ggfs. nach einem Zuwarten über eine bestimmte Zeitspanne, in Schritt 111 überprüft, ob der Kompressor bzw. der Motor aktuell stillsteht. Ist dies nicht der Fall, kehrt der Prozess in die Überwachungsroutine zurück.

Anderenfalls jedoch erfolgt die Feststellung, dass der Verdampfer mit dem Stillstand des Kompressor in einen passiv initiierten Abtaubetrieb übergegangen ist. Dieser ist in Figur 4 mit einem gestrichelten Oval und dem Bezugszeichen 114 gekennzeichnet. Im passiv initiierten Abtaubetrieb wird der Verdampfer weiter von Kühlluft durchströmt; in seinem Inneren erfolgt jedoch aufgrund des stillstehenden Klimakompressors keine Kältemittelverdampfung mehr. Die Durchströmung des Verdampfers mit Kühlluft führt daher zu einem Abtauen des Eises, was der Kühlluft Wärme entzieht, sodass während einer Überbrückungsphase nach wie vor Kälte in das Fahrzeuginnere eingetragen wird.

Ob dieser Kälteeintrag ausreichend ist, um den gewünschten Klimakomfort aufrechtzuerhalten, wird in Schritt 112 überprüft. Hierzu wird bevorzugt eine entsprechende Sensorik im Fahrzeuginnenraum oder im Bereich der Kühlluft-Auslassdüsen verwendet. Ist der Kälteeintrag ausreichend, kann der Abtaumodus aufrechterhalten werden. Der Prozess verläuft hierzu in einer Schleife um die Schritte 111 und 112. Insbesondere ist es erforderlich, weiter zu überwachen, ob sich der Kompressor bzw. der Motor nach wie vor im Stillstand befindet oder vom Fahrer oder der Start-Stopp-Automatik wieder gestartet wurde.

Wird in Schritt 112 hingegen festgestellt, dass der Kälteeintrag zur Aufrechterhaltung des gewünschten Klimakomforts im Fahrzeuginneren nicht ausreichend ist, insbesondere weil das den Latentspeicher bildende Eis am Verdampfer abgetaut ist, muss der passive Abtaumodus beendet und in Schritt 113 der Klimakompressor wieder eingeschaltet werden, was gegebenenfalls mit einem Start des Verbrennungsmotors einhergeht. Selbstverständlich ist es auch möglich, Schritt 113 zu übersteuern und im Hinblick auf Energieeinsparungen Abstriche am Klimakomfort in Kauf zu nehmen.

Wird oben in Schritt 103 allerdings festgestellt, dass ein Abtauen des Verdampfers erforderlich ist, d.h. insbesondere das die überwachten Betriebsparameter Parameterwerte angenommen haben, die innerhalb der Toleranzbereiche um die entsprechenden Schwellenwerte liegen, wird im rechten Zweig von Figur 4 überprüft, ob ein aktiver Wechsel in den Abtaubetrieb sinnvoll ist. Hierzu wird in Schritt 120 ebenfalls überprüft, ob ein baldiger Kompressor- bzw. Motorstillstand antizipierbar ist. Zu den Einzelheiten wird auf das oben zu Schritt 110 gesagte verwiesen. Ist kein baldiger Kompressor- bzw. Motorstillstand antizipierbar, ist ein aktiver Wechsel in den Abtaubetrieb erforderlich. Das Abtauen selbst kann entweder passiv durch schlichtes Abschalten des Klimakompressors oder aktiv durch zusätzliche Erwärmung des Verdampfers entweder elektrisch oder mittels Motorkühlflüssigkeit erfolgen.

Ist hingegen in Schritt 120 ein baldiger Kompressor- bzw. Motorstillstand antizipierbar, wird in Schritt 120 überprüft, ob der Wechsel in den Abtaubetrieb verzögerbar ist, um ihn gegebenenfalls mit dem antizipierten Kompressor- bzw. Motorstillstand zu synchronisieren. Insbesondere wird hier überprüft, ob der sich aus dem Toleranzbereich um die Betriebsparameter-Schwellenwerte ergebende, zeitliche Toleranzbereich für den Wechsel in den Abtaubetrieb bereits ausgeschöpft ist. Ist dies der Fall, muss unverzüglich gemäß Schritt 122 aktiv in den Abtaumodus übergegangen werden, um die Funktionsfähigkeit der Klimatisierungsvorrichtung aufrechtzuerhalten.

Ist der zeitliche Toleranzbereich jedoch noch nicht ausgeschöpft, kann zum oben bereits beschriebenen linken Zweig des Flussdiagramms von Figur 4 gewechselt werden und zwar insbesondere zu Schritt 111, d.h. in den passiv initiierten Abtaubetrieb, zu dessen Erläuterung auf das oben bereits gesagte verwiesen wird. Erfolgt der antizipierte Kompressor- bzw. Motorstillstand innerhalb des zeitlichen Toleranzbereiches kann die im Eis gespeicherte Kälte zur Überbrückung der Stillstandsphase genutzt werden. Kommt es hingegen aufgrund falscher Antizipation, manuellen Eingreifens des Fahrers oder plötzlich geänderter Verkehrssituation nicht oder zu spät, d.h. nach Ausschöpfen des zeitlichen Toleranzbereiches, zum Kompressor- bzw. Motorstillstand, wird das Verfahren beim nächsten Durchlauf zu Schritt 122, d.h. der aktiven Einleitung des Abtaubetriebs führen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Klimatisierungsvorrichtung
- 12: Gebläse
- 14: Kanalanordnung
- 16: Verdampfer
- 16a,b: Verdampfersegment
- 18: Heizungswärmetauscher
- 20: Filter
- 22: Entfeuchtungsverdampfer
- 24: Sorptionsmitteleinheit
- 100: Steuerungsverfahren
- 101,102,103, 111, 112, 113, 120, 121, 122: Verfahrensschritte von 100
- 114: passiv eingeleiteter Abtaubetrieb

## Patentansprüche

1. Klimatisierungsvorrichtung für ein Kraftfahrzeug, umfassend einen Kältemittelkreis mit wenigstens einem als Kältemittel/Luft-Wärmetauscher ausgebildeten und bei einer Arbeitstemperatur von weniger als 0°C betreibbaren Verdampfer (16), über den Kühlluft mittels einer Luftströmungserzeugungseinheit (12) in einen Innenraum des Kraftfahrzeugs einblasbar ist,
**dadurch gekennzeichnet,**
**dass** der Verdampfer (16) zwei unabhängig voneinander betreibbare, parallel zueinander von der Kühlluft durchströmbare Verdampfersegmente (16a, 16b) aufweist.

2. Klimatisierungsvorrichtung für ein Kraftfahrzeug, umfassend einen Kältemittelkreis mit wenigstens einem als Kältemittel/Luft-Wärmetauscher ausgebildeten und bei einer Arbeitstemperatur von weniger als 0°C betreibbaren Verdampfer (16), über den Kühlluft mittels einer Luftströmungserzeugungseinheit (12) in einen Innenraum des Kraftfahrzeugs einblasbar ist, insbesondere nach Anspruch 1,
**dadurch gekennzeichnet,**
**dass** dem Verdampfer (16) in Strömungsrichtung der Kühlluft ein ebenfalls als Kältemittel/Luft-Wärmetauscher ausgebildeter und bei einer Arbeitstemperatur von mehr als 0°C betriebener Entfeuchtungsverdampfer (22) strömungstechnisch vorgeschaltet ist.

3. Klimatisierungsvorrichtung nach einem der vorangehenden Ansprüche,
**dadurch gekennzeichnet,**
**dass** dem Verdampfer (16) in Strömungsrichtung der Kühlluft eine von der Kühlluft durchströmte Sorptionsmitteleinheit (24) strömungstechnisch vorgeschaltet ist.

4. Verfahren zum Betrieb einer Klimatisierungsvorrichtung (10) nach Anspruch 1,
**dadurch gekennzeichnet,**
**dass** während einer Betriebsphase nur ein erstes der Verdampfersegmente (16a, 16b) in einem Verdampferbetrieb bei einer Arbeitstemperatur von weniger als 0°C betrieben wird, während ein zweites der Verdampfersegmente (16b, 16a), das in einer vorangehenden Betriebsphase im Verdampferbetrieb bei einer Arbeitstemperatur von weniger als 0°C betrieben wurde, in einem Abtaubetrieb betrieben wird.

5. Verfahren zum Betrieb einer Klimatisierungsvorrichtung (10) nach einem der Ansprüche 1 bis 3,
**dadurch gekennzeichnet,**
**dass** der Verdampfer (16) abwechselnd in einem Verdampferbetrieb bei einer Arbeitstemperatur von weniger als 0°C und in einem Abtaubetrieb betrieben wird, wobei ein Betriebsparameter der Klimatisierungsvorrichtung (10) von einer Steuereinheit überwacht wird und dass bei Erreichen eines vorgegebenen Schwellenwertes für den Parameterwert des überwachten Betriebsparameters ein Wechsel zwischen dem Verdampferbetrieb und dem Abtaubetrieb angesteuert wird.

6. Verfahren nach Anspruch 5,
**dadurch gekennzeichnet,**
**dass** der überwachte Betriebsparameter die Temperatur der Kühlluft hinter dem Verdampfer (16), eine Druckdifferenz des Kühlluftdrucks über dem Verdampfer (16) und/oder ein Geräuschpegel einer zur Aufrechterhaltung eines konstanten Drucks hinter dem Verdampfer (16) geregelten Luftströmungserzeugungseinheit (12) ist.

7. Verfahren nach einem der Ansprüche 5 bis 6,
**dadurch gekennzeichnet,**
**dass** die Schwellenwerte jeweils auf Basis einer Mehrzahl aktueller Betriebsparameter berechnet werden.

8. Verfahren nach einem der Ansprüche 5 bis 7,
**dadurch gekennzeichnet,**
**dass** in die Bestimmung des Zeitpunktes eines Wechsels zwischen dem Verdampferbetrieb und dem Abtaubetrieb der aktuelle und/oder ein antizipierter Betriebszustand eines von einem Verbrennungsmotor angetriebenen Klimakompressors einbezogen wird.

9. Verfahren nach Anspruch 8,
**dadurch gekennzeichnet,**
**dass** eine künftige Stillstandsphase des Verbrennungsmotors antizipiert, ein Toleranzbereich für den Schwellenwert des überwachten Betriebsparameters vorgegeben und der Zeitpunkt des Betriebsartwechsels innerhalb seines resultierenden Toleranzbereichs so bestimmt wird, dass der Verdampfer während der antizipierten Stillstandsphase im Abtaubetrieb betrieben wird.

10. Verfahren nach einem der Ansprüche 4 bis 9,
**dadurch gekennzeichnet,**
**dass** der Verdampfer oder ein Verdampfersegment während einer Schubphase des Verbrennungsmotors bei einer gegenüber Zugphasen des Verbrennungsmotors verringerter Arbeitstemperatur angesteuert wird.

11. Verfahren nach Anspruch 5,
**dadurch gekennzeichnet,**
**dass** ein Wechsel zwischen dem Verdampferbetrieb und dem Abtaubetrieb jeweils nach Ablauf einer vorgegebenen Zeitspanne erfolgt, wobei die vorgegebene Zeitspanne auf Basis einer Mehrzahl aktueller Betriebsparameter berechnet wird.

## Claims

1. Air conditioning device for a motor vehicle, comprising a coolant circuit with at least one compressor (16) designed as a coolant/air heat exchanger and able to operate at a working temperature of less than 0°C, through which the cold air can be blown by means of an air flow generation unit (12) into the interior or the motor vehicle,
**characterised in that**
the compressor (16) exhibits two compressor segments (16a, 16b) that can be operated mutually independent, that are mutually parallel and through which cold air can flow.

2. Air conditioning device for a motor vehicle, comprising a coolant circuit with at least one compressor (16) designed as a coolant/air heat exchanged and able to operate at a working temperature of less than 0°C, through which the cold air can be blown by means of an air flow generation unit (12) into the interior or the motor vehicle, particularly according to claim 1,
**characterised in that**
connected upstream of the compressor (16) in terms of fluid mechanics in the direction of flow of the cold air is a dehumidification compressor (22) also designed as a coolant/air heat exchanger and operated at a working temperature of more than 0°C.

3. Air conditioning device according to any one of the preceding claims, **characterised in that** connected upstream of the compressor (16) in terms of fluid mechanics in the direction of flow of the cold air is an absorption agent unit (24) through which the cold air flows.

4. Process for operating an air conditioning device (10) according to claim 1,
**characterised in that**
during an operating phase, only a first of the compressor segments (16a, 16b) is operated in a compressor operation at a working temperature of less than 0°C, whereas a second of the compressor segments (16b, 16a), that has been operated in a preliminary operating phase in the compressor operation with a working temperature of less than 0°, is operated in a de-icing operation.

5. Process for operating an air conditioning device (10) according to one of claims 1 to 3,
**characterised in that**
the compressor (16) is operated alternately in a compressor mode with a working temperature of less than 0°C and in a de-icing mode, wherein an operating parameter of the air-conditioning device (10) is monitored by a control unit and when reaching a specified threshold for the parameter value of the monitored operating parameter, a change between compressor mode and de-icing mode is activated.

6. Process according to claim 5,
**characterised in that**
the monitored operating parameter is the temperature of the cold air behind the compressor (16), a pressure difference of the cold air pressure through the compressor (16) and/or a noise level of a regulated flow generation unit (12) behind the compressor (16) to maintain a constant pressure.

7. Process according to any one of clams 5 to 6,
**characterised in that**
the threshold values are calculated respectively on the basis of a plurality of actual operating parameters.

8. Process according to any one of claims 5 to 7,
**characterised by**
determining the point in time of a change between the compressor operation and the de-icing operation of the actual and/or an anticipated operating state of an air conditioning compressor driven by a combustion engine.

9. Process according to claim 8,
**characterised in that**
a future stationary phase of the combustion engine is anticipated, a tolerance range for the threshold value of the operating parameter monitored is specified and the time of the mode change is determined within its resulting tolerance range, in such a way that the compressor is operated during the anticipated stationary phase in de-icing mode.

10. Process according to any one of claims 4 to 9,
**characterised in that**
the compressor of a compressor segment is actuated during a thrust phase of the combustion engine at a reduced temperature compared with the stroke phases of the combustion engine.

11. Process according to claim 5,
**characterised in that**
a change between the compressor mode and the de-icing mode is made respectively after the process has been run for a specified time period, wherein the specified time period is calculated on the basis of a plurality of actual operating parameters.

## Revendications

1. Dispositif de climatisation pour un véhicule à moteur, comprenant un circuit de réfrigérant doté d'au moins un évaporateur (16) conçu sous la forme d'échangeur de chaleur et de réfrigérant/air et pouvant fonctionner à une température de fonctionnement inférieure à 0 C, par l'intermédiaire duquel l'air de refroidissement peut être soufflé, au moyen d'une unité de génération de flux d'air (12), dans un habitacle du véhicule à moteur,
**caractérisé en ce que**
l'évaporateur (16) comporte deux segments d'évaporateur (16a, 16b), lesquels peuvent fonctionner indépendamment l'un de l'autre et lesquels peuvent être traversés parallèlement l'un par rapport à l'autre par l'air de refroidissement.

2. Dispositif de climatisation pour un véhicule à moteur, comprenant un circuit de réfrigérant doté d'au moins un évaporateur (16) conçu sous la forme d'échangeur de chaleur et de réfrigérant/air et pouvant fonctionner à une température de fonctionnement inférieure à 0 C, par l'intermédiaire duquel l'air de refroidissement peut être soufflé, au moyen d'une unité de génération de flux d'air (12), dans un habitacle du véhicule à moteur, en particulier selon la revendication 1,
**caractérisé en ce que**
dans le sens d'écoulement de l'air de refroidissement, un évaporateur de déshumidification (22), conçu également sous la forme d'un échangeur de chaleur et de réfrigérant/air et fonctionnant à une température de fonctionnement supérieure à 0°C, est monté en amont en communication fluidique avec l'évaporateur (16) .

3. Dispositif de climatisation selon l'une quelconque des revendications précédentes, **caractérisé en ce que**,
dans le sens d'écoulement de l'air de refroidissement, une unité de sorbant (24), traversée par l'air de refroidissement, est montée en amont en communication fluidique avec l'évaporateur (16).

4. Procédé de fonctionnement d'un dispositif de climatisation (10) selon la revendication 1,
**caractérisé en ce que**
lors d'une phase de fonctionnement, seulement un premier des segments d'évaporateur (16a, 16b) fonctionne dans un mode évaporateur à une température de fonctionnement inférieure à 0°C, tandis qu'un deuxième des segments d'évaporateur (16b, 16a), lequel, dans une phase de fonctionnement précédente, fonctionnait dans le mode évaporateur à une température de fonctionnement inférieure à 0°C, fonctionne dans un mode dégivrage.

5. Procédé de fonctionnement d'un dispositif de climatisation (10) selon l'une quelconque des revendications 1 à 3,
**caractérisé en ce que,**
l'évaporateur (16) fonctionne alternativement dans un mode évaporateur à une température de travail inférieure à 0 C et dans un mode dégivrage, un paramètre de fonctionnement du dispositif de climatisation (10) étant surveillé par une unité de commande et que, lorsqu'une valeur seuil prédéterminée pour la valeur de paramètre du paramètre de fonctionnement surveillé est atteinte, un changement entre le mode évaporateur et le mode dégivrage est déclenché.

6. Procédé selon la revendication 5, **caractérisé en ce que**,
le paramètre de fonctionnement surveillé est la température de l'air de refroidissement derrière l'évaporateur (16), une différence de pression de la pression d'air de refroidissement au-dessus de l'évaporateur (16) et/ou un niveau de bruit d'une unité de génération de flux d'air (12) réglée pour maintenir une pression constante derrière l'évaporateur (16).

7. Procédé selon l'une quelconque des revendications 5 à 6, **caractérisé en ce que**
les valeurs seuil sont calculées respectivement en fonction d'une pluralité de paramètres de fonctionnement actuels.

8. Procédé selon l'une quelconque des revendications 5 à 7, **caractérisé en ce que**,
dans la détermination du moment de changement entre le mode évaporateur et le mode dégivrage, l'état actuel et/ou l'état de fonctionnement anticipé d'un compresseur de climatisation entraîné par un moteur à combustion interne est inclus.

9. Procédé selon la revendication 8,
**caractérisé en ce que**
une future phase d'arrêt du moteur à combustion interne est anticipée, une plage de tolérance pour la valeur seuil du paramètre de fonctionnement surveillé est prédéterminée et le moment du changement de mode dans sa plage de tolérance résultante est déterminé de telle sorte que l'évaporateur, lors de la phase d'arrêt anticipée, fonctionne dans le mode dégivrage.

10. Procédé selon l'une quelconque des revendications 4 à 9,
**caractérisé en ce que**
l'évaporateur ou un segment d'évaporateur est commandé lors d'une phase d'accélération du moteur à combustion interne à une température de fonctionnement inférieure à la température d'une phase de traction du moteur à combustion interne.

11. Procédé selon la revendication 5,
**caractérisé en ce que**
un changement entre le mode évaporateur et le mode dégivrage s'effectue respectivement après qu'un intervalle de temps prédéterminé s'est écoulé, l'intervalle de temps prédéterminé étant calculé en fonction d'une pluralité de paramètres de fonctionnement actuels.
